# EUROPÄISCHE PATENTSCHRIFT

(11) **EP 2 951 428 B1**
(45) Veröffentlichungstag und Bekanntmachung des Hinweises auf die Patenterteilung: **07.06.2017**
(21) Anmeldenummer: 14708812.4
(22) Anmeldetag: 30.01.2014
(51) Int. Cl.: F03D 9/00, F03B 13/16, H02K 41/02, H02K 7/06, F03B 13/18, F16H 19/02

(54) **LINEARGENERATOR UND LINEARANTRIEB**
LINEAR GENERATOR AND LINEAR DRIVE
GÉNÉRATEUR LINÉAIRE ET ENTRAÎNEMENT LINÉAIRE

(30) Priorität: 01.02.2013 DE 102013201716
(43) Veröffentlichungstag der Anmeldung: 09.12.2015
(73) Patentinhaber: SINN Power GmbH, 82131 Germering (DE)
(72) Erfinder: SINN, Philipp, 82131 Gauting (DE)
(74) Vertreter: Erhardt, Martin
(86) Internationale Anmeldenummer: PCT/EP2014/051824
(87) Internationale Veröffentlichungsnummer: WO 2014/118290

(56) Entgegenhaltungen:
- DE-A1- 2 005 386
- DE-A1-102010 013 199
- DE-A1-102010 027 361
- GB-A- 2 480 337

## Beschreibung

Die Erfindung betrifft eine Vorrichtung zum reversiblen Übertragen von linearen Bewegungen in Rotationsbewegungen und zur Umwandlung der Rotationsbewegungen in elektrische Energie und umgekehrt. Die Erfindung betrifft insbesondere eine Vorrichtung, die translatorische reversible Bewegungen, z.B. oszillierende Hubbewegungen, in Drehbewegungen und weiter in elektrische Energie in Form von Strom umwandeln kann. Da Strom mittels eines Elektromotors auch für die Erzeugung von Drehbewegungen verwendet werden kann, ist die Vorrichtung gemäß der Erfindung auch als Linearantrieb geeignet, indem die von einem elektrischen Strom erzeugte Drehbewegung von der Vorrichtung in eine translatorische Bewegung umgesetzt wird.

Viele technische Anwendungen haben das Ziel, eine translatorische, insbesondere oszillierend translatorische Bewegung in eine Drehbewegung umzusetzen, um mittels der Drehbewegung über einen Generator Strom zu erzeugen. Beispielsweise wird in einem Hubkolbenmotor der Kolben durch Verbrennen von fossilen Kraftstoffen und durch Führen des Kolbens in einem Zylinder in eine translatorische Bewegung versetzt, wobei der Kolben seine translatorische Bewegungsenergie über eine Kolbenstange auf eine Kurbelwelle überträgt, deren Drehbewegung wiederum einen Generator für die Stromerzeugung antreiben kann. Die Verwendung einer Kurbelwelle impliziert jedoch einen gleichbleibenden Hub, wie er etwa von Verbrennungsmotoren gewährleistet werden kann. Der Hub des Kolbens ist bei Verbrennungskraftmaschinen mit dem Durchmesser der Bewegungsbahn des Kurbelwellenzapfens abgestimmt. Ist die translatorische Bewegung ungleichförmig, also mit variierendem Hub, so ist diese Art der Bewegungsübertragung von translatorisch in rotatorisch nicht anwendbar.

Eine weitere Möglichkeit der Umsetzung einer translatorischen Bewegung in eine Drehbewegung stellt das so genannte Zahnstangen-Zahnradprinzip dar, bei dem eine translatorisch bewegte Zahnstange ein translatorisch ortsfest angeordnetes Zahnrad in eine Drehbewegung versetzt. Im Falle eines oszillierend translatorisch bewegten Kolbens kann die oszillierende Bewegung der Zahnstange (Kolbenstange) über Zahnräder und mittels geeignet angeordneten Freiläufen in eine gleichgerichtete Drehbewegung umgesetzt werden, die dann für einen Generator zur Stromerzeugung verwendbar ist. Auch wenn mit dieser Art der Bewegungsumsetzung von geradliniger Hubbewegung in eine Drehbewegung unterschiedlich große Hübe in eine Drehenergie umgesetzt werden können, ist das hierfür notwendige Getriebe jedoch, insbesondere wegen den notwendigen zwei Freiläufen, mechanisch aufwendig und hinsichtlich Umgebungsbedingungen, wie bspw. Witterungseinflüssen, empfindlich und daher relativ wartungsintensiv. Entsprechend ist diese Art der Bewegungsumsetzung nicht geeignet, um eine störungsfreie Funktion auch über einen längeren Zeitraum gewährleisten zu können.

Will man beispielsweise die Kraft aus Meereswellen in Strom umwandeln, können empfindliche Systeme für die Umsetzung der oszillierenden Wellenbewegung in eine Drehbewegung nur bedingt eingesetzt werden, da die rauen Witterungseinflüsse solche Systeme stark korrosiv angreifen und somit in deren Wirkungsweise und -grad negativ beeinflussen. Ein Schutz z.B. einer aufwendigen Mechanik, wie bspw. der von gegenläufig angeordneten Freiläufen, ist sehr aufwendig und wartungsintensiv. Daher ist eine Stromerzeugung aus Meereswellen unter Verwendung solcher Systeme störungs- und wartungsanfällig und ist daher oft wirtschaftlich unrentabel oder gar unrealisierbar.

Meereswellen erzeugen grundsätzlich eine langsame vertikal gerichtete Auftriebskraft während des Durchgangs eines Wellenberges. Zudem ist die Wellenhöhe bzw. die Wellenamplitude, d.h. der vertikale Niveauunterschied zwischen Wellental und Wellenberg nicht gleichbleibend. Damit ist der Hub, den ein auf der Wasseroberfläche, bspw. eines Meeres, schwimmender Schwimmkörper erfährt, unterschiedlich und hängt von den Wetterbedingungen und weiteren Umgebungseinflüssen, wie Gezeiten, geografischen Gegebenheiten, Schiffverkehr, etc., ab. Ein Wellenkraftwerk, wie es in DE 10 2008 048 730 B1 beschrieben ist, zeigt eine Vielzahl von flächig, im Wesentlichen nebeneinander angeordneten Schwimmkörpern, die angetrieben durch den Wellengang, unabhängig voneinander an Führungsstangen oszillierend translatorisch hin- und her, d.h. auf und ab bewegbar sind. Dabei sind die Schwimmkörper über eine Führungsstange an einer Trägerstruktur elastisch vorgespannt angebunden, so dass bei einem Wellendurchgang die Schwimmkörper zunächst gegen eine Federkraft entlang der Führungsstange vertikal nach oben angehoben werden. Die Feder bewegt dann zusammen mit der Schwerkraft den Schwimmkörper nach dem Wellendurchgang entlang der Führungsstange in ein Wellental zurück.

Um diese oszillierende translatorische Bewegung zum Erzeugen von Strom, d.h. elektrische Energie zu verwenden, kann grundsätzlich das Induktionsprinzip zur Anwendung kommen. Bei diesem Prinzip wird ein elektrischer Leiter relativ zu einem Magnetfeld bewegt. Zum Erzeugen eines nennenswerten Stromes bzw. Spannung sind hierbei jedoch möglichst schnelle Bewegungen und/oder ein starkes Magnetfeld notwendig. Beide Anforderungen sind jedoch in einem Wellenkraftwerk nur schwer realisierbar, insbesondere, wenn die von den Wellen bewirkte translatorische Bewegung direkt in elektrische Energie umgesetzt werden soll. Die von den Meereswellen über die Schwimmkörper erzeugte translatorische Bewegung ist für die effiziente Ausnutzung des Induktionseffektes in der Regel zu langsam, oder eine hierfür geignete Vorrichtung zu aufwendig und/oder teuer.

Jedoch können Meereswellen eine relativ starke translatorische Kraft erzeugen, welche nach Umsetzung in eine Drehbewegung zur Erzeugung elektrischer Energie verwendet werden kann. Hierbei ist die Umsetzung mittels einer Kurbelwelle bei variierenden Wellenhöhen, was in freien Gewässern üblich ist, jedoch nicht möglich (siehe Erläuterungen oben). Die Verwendung von Zahnstangen und von mit Freiläufen gekoppelten Zahnrädern zum Umsetzen der translatorischen Bewegungen in gleichgerichtete Drehbewegungen ist aufgrund der Witterungsbedingen und der empfindlichen Mechanik der Freiläufe - wie oben bereits erläutert -technisch und wirtschaftlich nicht optimal und nur mit hohem Aufwand realisierbar.

Ein weiteres Wellenhubkraftwerk, von dem im Oberbegriff der Erfindung ausgegangen wird ist in DE 10 2010 027 361 A1 gezeigt. Dort ist ein Weilenhubkraftwerk mit einem vertikal an einer im Meeresboden verankerten Führungsstange geführten Schwimmkörper gezeigt, an dem die Wellenberge Auftriebsarbeit verrichten. Allein durch Schwerkraft gleitet der Schwimmkörper nach Durchgang des Wellenberges wieder nach unten in ein Wellental. Der Schwimmkörper ist über Führungsrollen, welche in einem Führungskäfig angeordnet sind, an der Führungsstange geführt, wobei der Führungskäfig zusammen mit den Führungsrollen, zwei in Längsrichtung der Führungsstange beabstandete Lagerpunkte ausbildet. An einer Seite der Führungsstange ist zusätzlich eine Zahnstange angeordnet, mit der ein Zahnrad kämmt, welches ebenfalls zusätzlich im Führungskorb des Schwimmkörpers angeordnet ist. Das mit der Zahnstange kämmende Zahnrad treibt über ein Getriebe mit integrierten Freiläufen einen Stromgenerator an, der ebenfalls im Schwimmkörper aufgenommen ist. Der erzeugte Strom wird über einen Stromwandler, beispielsweise auf das Festland, geleitet. Die in DE 10 2010 027 361 A1 gezeigte Vorrichtung zum Erzeugen von elektrischer Energie aus dem Hub der Meereswellen weist eine Vielzahl von Bauteilen, insbesondere elektrischen Bauteile auf, die gegen Eintritt oder Angriff von Wasser, speziell Meerwasser, geschützt werden müssen. Daher ist die bekannte Anlage wartungsanfällig, bzw. kann bezüglich ihrer wirtschaftlichen Rentabilität nicht optimal arbeiten. Für einen kontinuierlichen Dauerlauf sind für die Vorrichtung gemäß DE 10 2010 027 361 A1 ein hoher Wartungsaufwand und kostenintensive Vorsorgemaßnahmen erforderlich.

Aus DE 695 20 678 T2 ist ein Transportwagen bekannt, der den Last tragenden Körper in zwei Teilkörper unterteilt, die mit jeweils einem Rad verbunden sind. Die beiden Teilkörper sind schwenkbar über ein Gelenk miteinander verbunden, wobei die Drehachse des Gelenks parallel zu den Drehachsen der Räder verläuft und in der Ebene der Drehachsen der Räder verläuft. Die beiden Teilkörper sind durch eine verbindende Federanordnung um die Drehachse des Gelenks schwenkbar, sodass die Räder elastisch an die Führungsschiene gedrückt werden, wobei die Andrückkräfte einstellbar sind. Zum Antrieb des Transportwagens sind auf jedem Teilkörper Elektromotoren angeordnet, die die Räder antreiben, welche auf gegenüberliegenden Seiten einer Führungsschiene abrollen können.

Die Erfindung hat zum Ziel, die im Oberbegriff angegebene bekannte Vorrichtung gemäß DE 695 20 678 T2 zu verbessern. Aufgabe der Erfindung ist es daher, eine Vorrichtung zum reversiblen, d.h. umkehrbaren Übertragen von linearen Bewegungen in Drehbewegungen und deren Umwandlung in elektrische Energie und umgekehrt bereitzustellen. Insbesondere oszillierende translatorische Bewegungen, wie sie beispielsweise von Meereswellen oder von elastisch gelagerten Prallkörpern herrühren, die von Luftdruckwellen translatorisch bewegbar sind, sollen von der erfindungsgemäßen Vorrichtungen in elektrische Energie gewandelt werden. Im Allgemeinen sollen dabei langsame kraftvolle Linearbewegungen in Strom gewandelt werden können und umgekehrt. Umgekehrt soll die Vorrichtung in der Lage sein, aus zugeführter elektrischer Energie einen Linearantrieb darzustellen. Eine kontrollierte Bewegung der linear zurückgelegten Strecke, Geschwindigkeit und/oder Kraft soll dabei einfach über gesteuerte Stufenmotoren realisierbar sein.

Darüberhinaus ist es Aufgabe der Erfindung die Vorrichtung in ihrem Aufbau und ihrer Ausführung einfach und zuverlässig sowie robust und wartungsarm auszubilden. Mit der Erfindung soll insbesondere die Aufgabe gelöst werden, eine Stromerzeugungs-Vorrichtung zu realisieren, welche in Wellenkraftwerken, insbesondere im Off-Shorebereich, auch bei extremen Witterungsbedingungen zuverlässig und über einen langen Zeitraum wartungsfrei arbeitet. Desweiteren ist es Aufgabe der Erfindung, eine kostengünstige Vorrichtung bereitzustellen, die aus wenigen Teilen möglichst einfach aufgebaut ist. Die Erfindung hat sich weiter die Aufgabe gestellt, die Wartung zu minimieren und im Falle einer solchen die einzelnen Teile einfach zugänglich und wartungsfreundlich bereitzustellen.

Die Aufgaben die sich die Erfindung gestellt hat, werden mit einer Vorrichtung nach Anspruch 1 gelöst, wobei reversible lineare Bewegungen, insbesondere oszillierende Hubbewegungen, in Rotationsbewegungen übertragen werden, welche zur Umwandlung in elektrische Energie dienen.

Rein aus Gründen der Anschaulichkeit wird die Erfindung am Beispiel eines Wellenkraftwerkes, wie es bspw. aus DE 10 2008 048 730 B1 bekannt ist, dargestellt. Die erfindungsgemäße Vorrichtung ist jedoch nicht auf diese Ausführungsform beschränkt, sondern bevorzugt in allen Anwendungen einsetzbar, bei denen eine translatorische Kraft zur Erzeugung von elektrischer Energie verwendet werden soll, oder umgekehrt, wenn ein mit elektrischer Energie angetriebener Linearantrieb zur Anwendung kommen soll. Die im Folgenden beispielhaft beschriebene Verwendung der erfindungsgemäßen Vorrichtung dient daher rein der Veranschaulichung an einem praktischen Beispiel, stellvertretend für eine Vielzahl von bevorzugten Anwendungsmöglichkeiten.

Die erfindungsgemäße Vorrichtung weist eine Zentralschiene auf, die von einem Tragelement umgeben ist, welches in Längsrichtung der Zentralschiene und relativ zu dieser linearverschieblich angeordnet ist. Eine Mehrzahl von Abrollelementen bzw. Wälzkörpern, die mit der Zentralschiene in Berührung stehen, sind in dem Tragelement drehbar gelagert, derart, dass die Abrollelemente während den relativen (oszillierenden) Linearbewegungen des Tragelements gegenüber der Zentralschiene im Zusammenwirken mit der Zentralschiene auf der Zentralschiene abrollen, wodurch die Linearbewegungen des Tragelementes bzw. der Zentralschiene in Rotationsbewegungen der Abrollelemente umgesetzt werden. Dabei bildet die Rotationsbewegung zumindest eines der Abrollelemente den Antrieb einer Elektromaschine. Im Falle der Ausbildung der erfindungsgemäßen Vorrichtung als Linearantrieb wird durch Zuführen von elektrischer Energie an die Elektromaschine des zumindest einen Abrollelements eine Drehbewegung erzeugt, die von dem Abrollelement durch Abrollen auf der Zentralschiene in eine translatorische Relativbewegung der Zentralschiene gegenüber dem Tragelement umgesetzt wird.

Gemäß der Erfindung ist daher die Linearbewegung der Zentralschiene bzw. des Tragelements über zumindest ein Abrollelement mit einer Elektromaschine gekoppelt. In einer bevorzugten Ausführungsform ist die Elektromaschine in den Abrollelementen integriert, die als Generator oder Elektromotor ausgebildet sind. Dabei weist das zumindest eine Abrollelement für die Erzeugung elektrischen Stroms oder für den Antrieb der Zentralschiene bzw. des Tragelementes bspw. ein drehbares Laufrad auf, das mit der Zentralschiene in Berührung steht. Innerhalb eines solchen als Rotor einer Elektromaschine ausgebildeten Laufrads kann in einem gegenüber dem Laufrad feststehenden Nabenbereich des Abrollelements ein Stator der Elektromaschine ausgebildet sein. Über drehfeste axiale Enden oder Vorsprünge, bspw. Achsstummel ist elektrischer Strom von dem Generator abnehmbar oder an den Elektromotor zuführbar. Die bevorzugt konzentrisch mit dem Nabenbereich ausgebildeten Vorsprünge können dabei gleichzeitig zur Aufnahme der Abrollelemente im Tragelement dienen.

Selbstredend können alle in einem Tragelement aufgenommenen Abrollelemente eine solche Elektromaschine darstellen, jedoch ist für die Funktion bzw. die Verwirklichung der erfindungsgemäßen Vorrichtung die Ausbildung eines Abrollelements als Elektromaschine ausreichend. In einer weiteren Ausführungsform sind in einem Tragelement drei als Elektromaschinen ausgebildete Abrollelemente derart angeordnet, dass die Berührungspunkte bzw. -linien der Abrollelemente mit der Zentralschiene in einer Ebene liegen, die senkrecht zur Zentralschienenlängsachse ist. Im Falle dreier Abrollelemente schließen die Drehachsen zweier benachbarter Abrollelemente bevorzugt einen Winkel von 120° ein, wodurch eine stabile Dreipunktführung der Zentralschiene durch die Abrollelemente ausgebildet wird. Dass eine solche Führung auch mit zwei oder mehr als drei Abrollelementen ausbildbar ist, ist für den Fachmann selbstredend, wobei der Winkel zwischen zwei Drehachsen benachbarter Abrollelemente bevorzugt 360° geteilt durch die Anzahl der Abrollelemente entsprechen sollte. Bei zwei in einem Tragelement aufgenommenen Abrollelementen wären die Drehachsen somit parallel.

Um eine sichere Aufnahme und Führung der Zentraischiene durch die Abrollelemente zu gewährleisten, kann insbesondere bei der Verwendung von zwei oder drei Abrollelementen in einem Tragelement, die Lauffläche der Abrollelemente mit einer umlaufenden Nut, beispielsweise eine U- oder V-förmige Nut, ausgebildet werden, wodurch die Führung der Zentralschiene zwischen den Abrollelementen eine bessere Seitenstabilität erhält. Ab einer Anordnung von drei oder mehr Abrollelementen in einem Tragelement können die Laufräder bzw. deren Lauffläche in axialer Richtung der Abrollelemente plan ausgebildet sein, da dann durch Winkel kleiner 180° zwischen den Drehachsen zweier benachbarter Abrollelemente eine ausreichende Abstützung der Zentralschiene gegen Herausrutschen der Zentralschiene aus der Führung zwischen den Abrollelementen gegeben ist.

Darüberhinaus sind die Abrollelemente erfindungsgemäß durch elastische Vorspannkräfte gegen die Zentralschiene vorgespannt, wodurch ein Abheben der Lauffläche der Abrollelemente von der Umfangsfläche der Zentralschiene vermieden wird. Dadurch, dass die Abrollelemente im Tragelement die Zentralschiene elastisch vorgespannt druckbelastet beaufschlagen, ist die Zentralschiene im Wesentlichen spielfrei gelagert.

Die Abrollelemente sind im Tragelement bevorzugt so angeordnet, dass sich die Vorspannkräfte auf die Zentralschiene gegenseitig aufheben. So können hohe bis sehr hohe Vorspannkräfte angelegt werden, ohne dass sich der Abrollwiderstand der Abrollelemente auf der Zentralschiene übermäßig erhöht. Der Anpressdruck der Abrollelemente kann ähnlich der Gewichtsbelastung eines Radreifens eines Eisenbahnwagons oder einer Lokomotive auf einer Eisenbahnschiene sehr hoch sein, wobei gleichzeitig die translatorische Beweglichkeit zwischen der (Zentral-) Schiene und dem Tragelement (Wagon bzw. Lokomotive) leichtgängig ist. Darüberhinaus wird durch hohe Anpressdrücke - bevorzugt liegt an jedem Abrollelement im Wesentlichen die gleich große elastische Kraft an - gewährleistet, dass jede translatorische Bewegung zwischen der Zentralschiene und dem Tragelement durch Abrollen der Wälzkörper, bevorzugt schlupffrei, in eine Drehbewegung, d.h. in eine Rotationsbewegung der Wälzkörper bzw. der Abrollelemente umgesetzt wird. D.h. umgekehrt, dass im Falle angetriebener Abrollelemente eine translatorsche Bewegung zwischen der Zentralschiene und dem Tragelement aus dem Drehantrieb resultiert. Auch bei einer Abnutzung der Zentralschiene und der Abrollelemente ändert sich die spielfreie schlupffreie Führung und Übertragung der Kraft nicht, da die elastisch vorgespannte, kraftbeaufschlagte Einheit aus den in den Tragelementen aufgenommenen Abrollelementen und der Zentralschiene den Abrieb und Verschleiß zwischen Abrollelement und Zentralschiene ausgleicht ohne dabei wesentlich an Vorspannkraft zu verlieren.

Des Weiteren kann einfach durch eine Veränderung/Reduzierung des Durchmessers der Abrollelemente die Vorrichtung für einen Einsatz unterschiedlich schneller Linearbewegungen in einfacher Art und Weise angepasst werden. Durch Anpassung des Durchmessers kann mechanisch die Rotationsgeschwindigkeit der Abrollelemente geändert werden, was zur Folge hat, dass eine gegebene Kraftübertragung mit schneller oder langsamer drehenden Abrollelementen (Dynamos / Elektromotoren) in Strom gewandelt werden kann. Der Einsatz von Kupfer und seltenen Erden in den für die Induktion erforderlichen Magneten kann so bei langsamen Linearbewegungen optimiert und im Vergleich zu herkömmlichen linearen Induktionsgeneratoren stark verringert werden.

Somit können die Rotationsbewegungen von zumindest einem Abrollelement zuverlässig den Antrieb oder den Abtrieb einer Elektromaschine bilden. Selbstredend und vom Erfindungsgedanken umfasst, können alle oder nur ein Teil der Abrollelemente als Elektromaschinen ausgebildet sein. Dabei übernehmen die Abrollelemente gleichzeitig mehrere Funktionen, nämlich die der Führung der Zentralschiene in Längsrichtung als auch die Übertragung der translatorischen Bewegung in eine rotatorische Bewegung und umgekehrt. Als dritte Funktion können die Abrollelemente, falls sie als Elektromaschinen ausgeführt sind, auch die Umwandlung der kinetischen Energie in elektrische Energie übernehmen und umgekehrt. Alternativ sind die Abrollelemente / Wälzkörper mit geeigneten, rotatorisch angekoppelten Elektromaschinen verbunden.

Über die elastischen Andruckkräfte werden die Abrollelemente gegen die Führungsschiene, welche zwischen ihnen angeordnet ist, gedrückt und drehen sich, sobald eine translatorische Bewegung der Führungsschiene gegenüber dem Tragelement stattfindet. Bevorzugt sind die Abrollelemente hierbei Wälzkörper oder Laufräder aus einem metallischen Werkstoff oder Kunststoff, und sind inert gegenüber Meer-/Salzwasser oder sind nicht, oder nur wenig, z.B. korrosiv, angreifbar. Die Zentralschiene ist bevorzugt ebenfalls aus bspw. demselben metallischen Werkstoff oder Kunststoff, wie die Abrollelemente bzw. deren Lauffläche. Der Werkstoff der Zentralschiene und der Laufflächen der Abrollelemente muss dabei den elastischen Anpresskräften standhalten, mit denen die Abrollelemente gegen die Zentralschiene abgestützt sind, und muss ebenfalls gegenüber Meerwasser und den weiteren Einsatzbedingungen widerstandfähig sein.

Das Schiene-Laufrad-Prinzip - ähnlich eines Laufrades einer Eisenbahnlokomotive auf einer Eisenbahnschiene - ist aus dem Stand der Technik hinsichtlich seines guten Wirkungsgrades für die Umsetzung einer Drehbewegung in translatorische Bewegung und umgekehrt und hinsichtlich der guten Standfestigkeit gegenüber Witterungsbedingungen bekannt. Jedoch ist aus dem Stand der Technik nicht bekannt, dass dieses Schiene-Laufrad-Prinzip auch zur Führung in Längsrichtung der Schiene geeignet ist, wenn mehrere am Umfang der Schiene angeordnete Laufräder verwendet werden. Weiter ist aus den Stand der Technik ebenfalls nicht bekannt Führungsrollen, insbesondere kraftbeaufschlagte Führungsrollen, wie sie die Erfindung vorsieht, als Elektromaschinen auszubilden oder mit Elektromaschinen zu koppeln, damit gleichzeitig mit der Umsetzung einer translatorischen Bewegung in eine rotatorische Bewegung oder umgekehrt, eine Stromerzeugung oder ein Linearantrieb bewerkstelligt werden kann.

In einer anderen Ausführungsform kann die Vorrichtung gemäß der Erfindung mit ortsfesten Abrollelementen und einer relativ dazu bewegbaren Zentraischiene betrieben werden. Umgesetzt auf das Wellenkraftwerk, das aus DE 10 2008 048 730 B1 bekannt ist, heißt dies, dass die Zentralschiene beispielsweise mit einem Schwimmkörper so verbunden sein kann, dass die Zentralschiene über die Auslenkung des Schwimmkörpers durch die Meereswellen oszillierend vertikal auf und ab bewegt wird. Das Tragelement der erfindungsgemäßen Vorrichtung ist bspw. ortsfest gegenüber der Trägerstruktur des Wellenkraftwerks an derselbigen befestigt, und die in dem Tragelement angeordneten Abrollelemente führen die Zentralschiene in deren Längsrichtung. Die translatorisch relativ zum Tragelement und zur Trägerstruktur des Wellenkraftwerks bewegte Zentralschiene bzw. Führungsstange versetzt die Abrollelemente in Drehbewegungen, wobei die bspw. als Generatoren ausgebildeten Abrollelemente elektrische Energie erzeugen können.

In einem weiteren Ausführungsbeispiel des Wellenkraftwerks gemäß DE 10 2008 048 730 B1 kann die Führungsstange feststehend an der Trägerstruktur des Wellenkraftwerks befestigt sein, und der Schwimmkörper über die Abrollelemente an der Führungsstange vertikal bzw. in Amplitudenrichtung der Welle geführt werden. Über die vertikal oszillierende Bewegung des Schwimmkörpers rollen die Abrollelemente an der Führungsstange entlang ab. Durch die Drehbewegung der Abrollelemente kann, wie beim oben angegebenen Beispiel, elektrischer Strom erzeugt werden.

In beiden Fällen wird also durch Abrollen der Abrollelemente auf der Führungsstange eine Translation in eine Drehbewegung umgesetzt. Dabei übernehmen die Abrollelemente sowohl die Umsetzungsfunktion der translatorischen Energie in rotatorische Energie als auch eine Führungsfunktion in Längsrichtung der Führungsschiene, insbesondere dann, wenn drei oder mehrere Abrollkörper bzw. Abrollelemente in einem Tragelement angeordnet werden.

Dabei ist der Antrieb der Führungsstange durch Meereswellen nur ein mögliches Antriebsbeispiel für die erfindungsgemäße Vorrichtung und jeder andere Antrieb zur translatorischen Auslenkung der Führungsstange bzw. des Tragelement ist geeignet, um mit der erfindungsgemäßen Vorrichtung elektrische Energie zu erzeugen. Dabei ist es egal, ob die Führungsstange von einem Hubkolbenmotor oder über elastisch gelagerte Prallbleche mittels Luftdruckwellen oder über Wasserwellen ausgelenkt wird.

Zum Erhöhen der Seitenführung der Führungsstange bzw. der Zentralschiene, also quer zur deren Längsachse, wird man ein weiteres in Längsrichtung der Zentralschiene beabstandetes Führungslager ausbilden, damit die Relativbewegung der Zentralschiene gegenüber dem Tragelement im Wesentlichen nur in Richtung ihrer Längsachse ausführbar ist. Diesen zweiten Führungspunkt wird man bevorzugt ebenfalls mit einer erfindungsgemäße Vorrichtung mit einem Tragelement und darin angeordneten Abrollelementen, die mittels einer Anpresskraft an die Zentralschiene gedrückt werden, in gleicher Weise ausbilden, wie den ersten Lagerpunkt, der in den obigen Erläuterung geschildert wurde. Im einfachsten Fall wird man den zweiten Lagerpunkt einer Zentralschiene mit einem baugleichen Tragelement und baugleichen Abrollelementen ausbilden, was jedoch nicht zwingend ist. Anwendungsfallspezifisch kann jedoch jeder Lagerpunkt einer Zentralschiene einsatzbedingt optimal ausgestaltet werden.

In anderen Anwendungsfällen der erfindungsgemäßen Vorrichtung kann auch eine Vielzahl von Tragelementen mit darin angeordneten Abrollelementen in Längsrichtung der Zentralschiene hintereinander geschaltet werden, wobei die einzelnen Tragelemente miteinander verbunden werden können. Dies ist insbesondere dann bevorzugt, wenn über die Verbindungen der Tragelemente nicht nur ein Kraftschluss ausgebildet werden soll, sondern gleichzeitig eine elektrische Verbindung zum Weiterleiten des erzeugten Stroms an einen Verbraucher oder Energiespeicher zwischen den Tragelementen hergestellt werden soll. Speziell für die Weiterleitung von Strom über die Verbindung von mehreren in Serie geschalteten Tragelementen mit darin angeordneten Abrollelementen wird das Tragelement bevorzugt zweiteilig ausgeführt, wobei die beiden Teile des Tragelements elektrisch voneinander isoliert sind, damit jeder Teilträger eine Polung des erzeugten Stroms leiten kann. Erfindungsgemäß sind die Tragelemente so ausgebildet, dass sie für jedes Abrollelement zwei Haltelaschen aufweisen, mit denen die Abrollelemente, bevorzugt an den axialen Enden im Nabenbereich aufgenommen werden können. Dabei ist es bevorzugt, dass die lichte Weite zwischen den Abrollelementen vor dem Einsetzen der Zentralschiene kleiner ist als der Durchmesser bzw. die Querschnittsabmessung der Zentralschiene. Dadurch werden beim Einsetzen der Zentralschiene die Haltelaschen für die Abrollelemente elastisch verformt und so die Abrollelemente mit einer elastischen Kraft gegen die Zentralschienen gedrückt. Ein Anschlag an den Tragelementen kann verhindern, dass die Haltelaschen über den elastischen Verformungsbereich hinausverformt werden. Dies bringt zum einen Montagesicherheit und zum anderen verhindert dies im Betrieb der erfindungsgemäßen Vorrichtung bei großen Seitenkräften eine Beschädigung der Vorrichtung und begrenzt eine über ein bestimmtes Maß gewünschte seitliche Auslenkung. Ferner gewährleistet eine derartige Anordnung der Abrollelemente einen selbsttätigen Verschleißausgleich, da die Abrollelemente im Bereich der elastischen Verformung der Haltelaschen verschleiß- und abriebbedingte Durchmesseränderungen an den Abrollelementen bzw. an der Zentralschiene selbsttätig ausgleichen können.

In einer weiter bevorzugten Ausführungsform sind die Haltelaschen mit dem Tragelement integriert ausgebildet und der Verformungsanschlag zur Vermeidung einer plastischen Verformung der Haltelaschen ist Bestandteil des Tragelements. Dabei sollte der Weg für die elastische Auslenkbarkeit so dimensioniert sein, damit eine gute Längsführung der Zentralschiene gewährleistet ist.

In vielen Fällen wird man als Zentralschiene einen stangenförmigen Körper mit rundem Querschnitt wählen, wobei aus Gewichts- und Steifigkeitsgründen in diesen Fällen bevorzugt Rohre zum Einsatz kommen. Jedoch ist die erfindungsgemäße Vorrichtung ebenfalls mit Führungsschienen mit Rechteck-Querschnitt oder Vieleck-Querschnitt einsetzbar. Die Oberfläche bzw. Umfangsfläche bzw. Mantelfläche der Zentralschiene und die der Laufringe der Abrollelemente sollte reibungsoptimiert gewählt werden, um die Rollreibung zwischen der Zentralschiene und den Abrollelementen möglichst gering zu halten. Aufgrund der hohen sich aufhebenden Anpresskräfte bietet sich speziell bei rauen Einsatzbedingungen eine Metall/Metall-Paarung für die Zentralschiene und die Laufringe der Abrollelemente an. Über die hohen Anpresskräfte, die mittels entsprechend steifen Tragelementen erzeugt werden können - ähnlich einem Eisenbahnwagonlaufrad auf einer Eisenbahnschiene - kann ein nahezu schlupffreies Abrollen der Abrollelemente auf der Zentralschiene gewährleistet werden. Auch die Verwendung von Kunststoffpaarungen ist durchaus vorstellbar, solange die Dauerstandfestigkeit gegeben ist. Nicht vom Erfindungsgedanken ausgeschlossen ist eine Kunststoff/Metall-Paarung, genausowenig wie der Einsatz von Gummi oder Keramik. Die vorliegende Erfindung ist nicht auf die Auswahl bestimmter Werkstoffe limitiert, die aufeinander abrollen.

Weiterhin ist die Erfindung nicht dahingehend limitiert, dass das Tragelement die Zentralschiene umgibt, sondern es ist für einen Fachmann selbstredend möglich, die Zentralschiene und das Tragelement so auszubilden, dass die Zentralschiene, bspw. als Rohr oder allgemein als Hohlprofil ausgebildet, das Tragelement umgibt. In einer solchen von der Erfindung umfassten Ausführungsform drücken die Abrollelemente elastisch vorgespannt gegen eine innere Fläche des Hohlprofils. Die translatorische Relativbewegung zwischen Zentralschiene und Tragelement findet dann innerhalb des Hohlprofils statt. Eine derartige Anordnung ist daher nur eine konstruktive Abwandlung der zuvor geschilderten Ausführungsformen. Die Wirkprinzipien zur Erzeugung elektrischen Stroms aus insbesondere oszillierenden translatorischen Bewegungen mittels Umsetzung in Drehbewegungen bleiben erhalten. Analoges gilt für den erfindungsgemäßen Linearantrieb, der gemäß diesem Ausführungsbeispiel innerhalb des Hohlprofils angeordnet ist und das das Hohlprofil bzw. das darin über die Abrollelemente abgestützte Tragelement linear bewegt.

Die Erfindung ist weiterhin nicht auf die Oberflächenbeschaffenheit der Zentralschienen bzw. der Abrollelemente eingeschränkt. So ist vorstellbar, die Oberflächen aufzurauhen, zu riffein oder mit einem Zahnprofil zu versehen, wobei die Laufflächen der Abrollelemente hierzu passende Oberflächen aufweisen. D.h. auf einem Zahnprofil, bspw. auf einer mit einer Vielzahl von umlaufenden Nuten versehenen Führungsstange, wird man die Abrollelement in einer Art Zahnrad ausbilden, mit Zähnen, die mit dem Zahnprofil kämmen. Für die Funktion der erfindungsgemäßen Vorrichtung ist es lediglich wesentlich, dass eine Bewegungsübertragung von der Zentralschiene auf die Abrollelemente möglich ist, wobei dies über Reibkräfte mit entsprechendem Anpressdruck genauso ausführbar ist, wie über einen entsprechend ausgebildeten Formschluss der beteiligten Baugruppen, bzw. Bauteile.

Im Folgenden werden exemplarisch ohne den Erfindungsgedanken zu limitieren anhand von Figuren bevorzugte Ausführungsbeispiele zum Zweck der Veranschaulichung detailliert beschrieben. Dabei zeigen:
- Figur 1: eine perspektivische Ansicht eines ersten Ausführungsbeispiels der erfindungsgemäßen Vorrichtung;
- Figur 2: eine Seitenansicht des Ausführungsbeispiels gemäß Figur 1;
- Figur 3: eine Draufsicht des Ausführungsbeispiels gemäß Figur 1 ohne Zentralschiene;
- Figur 4: eine perspektivische Ansicht eines zweiten Ausführungsbeispiels der erfindungsgemäßen Vorrichtung mit zwei Tragelementen zur Ausbildung von zwei Lagerstellen für die Längsführung der Zentralschiene;
- Figur 5: eine perspektivische Ansicht eines dritten Ausführungsbeispiels der erfindungsgemäßen Vorrichtung mit mehreren in Serie geschalteten Tragelementen mit darin angeordneten Abrollelementen;
- Figur 6: eine perspektivische Ansicht eines einstückig ausgebildeten Tragelementes gemäß der Erfindung;
- Figur 7: eine Detailansicht A des Tragelementes gemäß Figur 6 mit einem in einer Haltelasche aufgenommenen axialen Ende eines Abrollelements gemäß der Erfindung;
- Figur 8: eine Draufsicht eines zweistückig ausgebildeten Tragelementes gemäß der Erfindung;
- Figur 9: ein Anwendungsbeispiel der erfindungsgemäßen Vorrichtung am Beispiel des Wellenkraftwerks gemäß DE 10 2008 048 730 B1

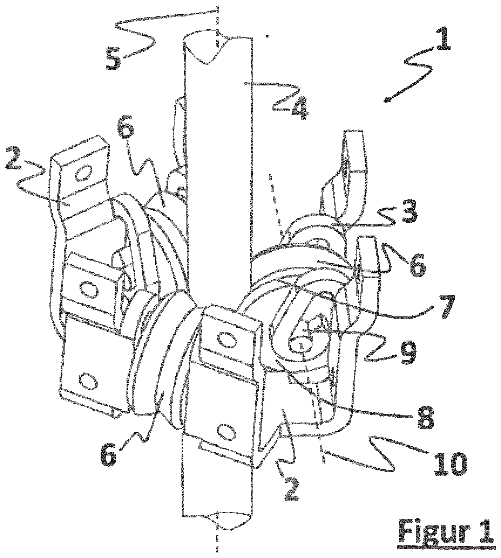

Das in Figur 1 dargestellte Ausführungsbeispiel zeigt die erfindungsgemäße Vorrichtung mit einem Tragelement 2, das in diesem Ausführungsbeispiel die Grundform eines Ringkörpers hat, in dem drei Abrollelemente 6 angeordnet sind, und das eine Zentralschiene 4 umgibt. Jedes der drei Abrollelemente 6 steht mit der Zentralschiene 4 in Berührung und ist mit axialen Enden 9, in Haltelaschen 3 des Tragelements 2 aufgenommen. Verschiebt man gedanklich die Zentralschiene 4 längs über Längsachse 5 gegenüber dem Tragelement 2, oder verschiebt man gedanklich das Tragelement 2 längs der Längsachse 5 der Zentralschiene 4 gegenüber der Zentralschiene 4, so rollen die Abrollelemente 6 auf der Umfangsfläche der Zentralschiene 4 ab.

Die in Figur 1 gezeigten Abrollelemente 6 können dabei so ausgebildet sein, dass sie ein mit der Zentralschiene 4 in Berührung stehendes Laufrad 7 aufweisen, wobei die Drehachse 10 des Laufrades 7 der Drehachse bzw. der Rotationsachse des Abrollelements 6 entspricht. Innerhalb des Laufrades 7 ist ein koaxialer Nabenbereich 8 angeordnet, der axiale Enden 9 aufweist, die in den Haltelaschen 3 des Tragelements 2 drehfest aufgenommen sind, sodass der Nabenbereich 8 gegenüber dem Laufrad 7 und dem Trageelement 2 dreh- und ortsfest ist. Mit dieser beispielhaften Anordnung kann das Laufrad 7 als ein Rotor und der Nabenbereich 8 als ein Stator einer Elektromaschine ausgebildet sein.

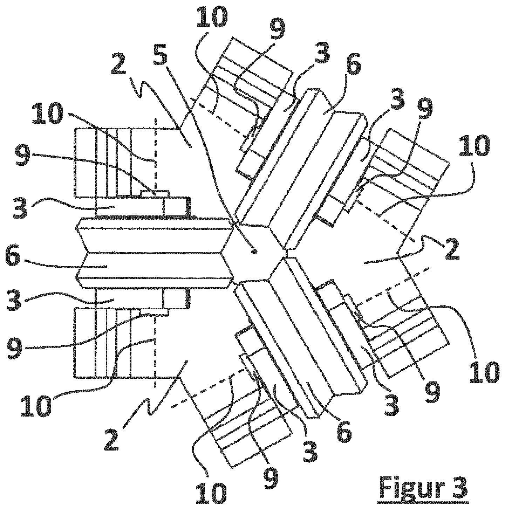

In den in den Figuren 1 bis 5 dargestellten bevorzugten Ausführungsbeispielen ist das Abrollelement 6 als Laufrad 7 ausgebildet, was für die grundsätzliche Funktion der erfindungsgemäßen Vorrichtung jedoch nicht zwingend ist, da die Abrollelemente 6 beispielsweise auch als drehbar gelagerte Vollkörper in der Art eines Wälzkörpers im Tragelement 2 gelagert und geeignet mit einer Elektromaschine für deren Drehan- oder- abtrieb gekoppelt werden können. Der Einfachheit halber wird in der vorliegenden Erfindung von Abrollelementen 6 gesprochen, auch wenn diese als Laufräder 7, wie in den Figuren beispielhaft dargestellt, ausgebildet sind.

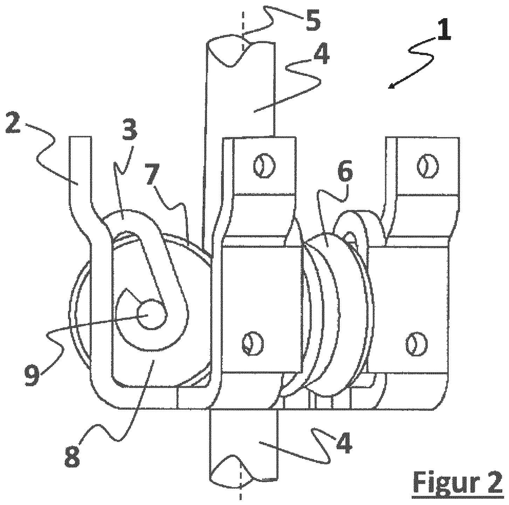

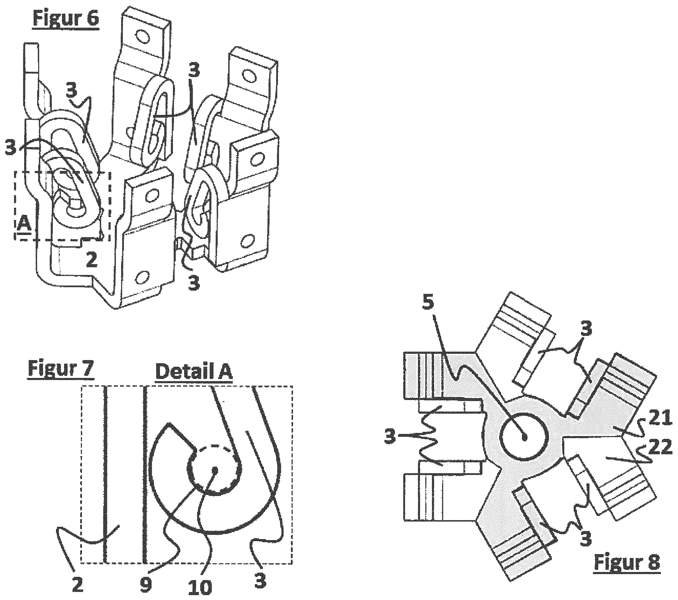

Gemäß der Erfindung werden die Abrollelemente 6 gleichzeitig mit elastischen Vorspannkräften so gegen die Zentralschiene 4 gedrückt, dass die Zentralschiene 4 von den Abrollelementen 6 gelagert aufgenommen ist. Bevorzugt dabei in einer Lagerebene 10, und so, dass sich die einzelnen Vorspannkräfte gegenseitig aufheben (vgl. Figur 2). Die elastischen Vorspannkräfte werden in dem in den Figuren gezeigten Ausführungsbeispielen über die Haltelaschen 3 erzeugt, welche Haltelaschen 3 bei Montage, d.h. bei der Hindurchführung der Zentralschiene 4 durch die umfänglich zur Zentralschiene 4 angeordneten Abrollelemente 6, elastisch verformt werden. Die Haltelaschen 3 sind dabei bevorzugt integral, d.h. einstückig, mit dem Tragelement ausgebildet (vgl. Figur 6). Weiter bevorzugt ist das Tragelement 2 ein Blechbiegeteil, das in einfacher Serienfertigung herstellbar ist. So zeigt das Beispiel eines Tragelements 2 in Figur 6, dass die Haltelaschen für die Abrollelemente 6 aus Blechstreifen gebildet werden, die geeignet so eingerollt (gebogen) sind, dass sie die axialen Enden 9 der Abrollelemente 6 aufnehmen können.

Nach der Montage der Abrollelemente 6 in die Haltelaschen 3, also vor dem Aufsetzen der Montagegruppe - Tragelement 2 und Abrollelemente 6 - auf die Zentralschiene 4 sind die Endbereiche der Haltelaschen 3, die die axialen Enden 9 der Abrollelement 6 aufnehmen, vom Grundkörper des Tragelements 2 beabstandet. Somit können sich die Haltelaschen 3 bei der Montage/dem Einsetzen der Zentralschiene 4 elastisch verformen und bringen die erfindungsgemäß erforderlichen Vorspannkräfte über die Abrollelemente 6 auf die Zentralschiene 4 auf (vgl. Figur 7). Geeigneterweise sind am Tragelement 2 Anschläge für die Begrenzung der elastischen Verformung der Haltelaschen 3 vorgesehen, damit sich die Haltelaschen 3 bei der Montage oder bei einer seitlichen Kraftbeaufschlagung der Zentralschiene 4 nicht plastisch verformen können, wodurch die elastischen Vorspannkräfte verloren gingen. Die am Grundkörper des Tragelementes 2 vorgesehenen Anschläge werden von den Haltelaschen 3 bevorzugt auch im montierten Zustand der Zentralschiene 4 nicht erreicht (vgl. Figur 7), damit die Zentralschiene 4 quer zu ihrer Längsrichtung elastisch gelagert ist. Den Federweg, den die elastische Lagerung der Zentralschiene 4, d.h. die Verformung der Haltelaschen vollziehen können, sollte dabei nur so groß sein, dass in jedem Betriebszustand der erfindungsgemäßen Vorrichtung immer alle Abrollelemente 6 mit ihren Laufflächen 7 zur kraftbelasteten Anlage an die Zentralschiene 4 kommen. Gleichzeitig sollen sie jedoch so groß sein, dass sie verschleiß- und abriebbedingte Abnutzungen an der Zentralschiene 4 bzw. an den Abrollelementen 6 ausgleichen können.

In dem in den Figuren 1 bis 3 gezeigten Ausführungsbeispielen für die erfindungsgemäße Vorrichtung werden drei Abrollelemente 6 durch ein Tragelement 2 derart aufgenommen, dass die Drehachsen 10 der Abrollelemente 6 bzw. deren Laufflächen 7 in einer Ebene zum Liegen kommen und jeweils einen Winkel von 120° mit der benachbarten Drehachse 10 ausbilden. Diese Dreipunkt-Lagerung zeichnet sich dadurch aus, dass sie mit einem geringen Bauteileaufwand eine stabile Zentrierung der Zentralschiene 4 ausbildet, wobei sich die Anpresskräfte der Abrollelemente 6 gegen die Zentralschiene 4 gegenseitig aufheben. In dem in den Figuren 1 bis 3 gezeigten Beispiel sind die Abrollelemente 6 zusätzlich mit einer Hohlnut auf deren Lauffläche versehen, was die Seitenführung erhöht. Eine solche Hohlnut oder Keilnut ist jedoch nicht unbedingt erforderlich, ggf. jedoch bei der Anordnung von nur zwei Abrollelementen 6 im Tragelement 2 sinnvoll, damit eine stabile Seitenführung erreicht werden kann.

Ähnlich dem Beispiel der Figuren 1 bis 3 kann die erfindungsgemäße Vorrichtung bspw. mit vier im Winkel von 90° angeordneten Abrollelementen 6 ausgeführt werden. Bei leicht erhöhtem Teileaufwand kann dadurch die in die erfindungsgemäße Vorrichtung eingeleitete oder ausgeleitete translatorische Bewegung zur Drehumsetzung auf vier Abrollelemente bzw. Wälzkörper verteilt werden. Die Anzahl der Abrollelemente 6, die in einem Tragelement 2 eingesetzt werden, ist durch den Erfindungsgedanken nicht begrenzt und kann einsatzspezifisch ausgewählt werden. Erfindungswesentlich ist nur, dass die Abrollelemente 6 unter Kraftausübung gegen die Zentralschiene 4 gedrückt werden, damit eine translatorische Bewegung der Zentralschiene 4 oder des Tragelements 2 eine Drehbewegung der Abrollelemente 6 oder umgekehrt der Drehantrieb der Abrollelemente 6 zuverlässig eine translatorische Bewegung der Zentralschiene 4 oder des Tragelements 2 zur Folge hat. Dabei sind die Abrollelemente 6 so in dem Tragelement 2 angeordnet, dass sich ihre Andruckkräfte gegenseitig aufheben, damit die translatorische Bewegung mit möglichst geringer Rollreibung ausführbar ist.

Wie insbesondere gut aus Figur 2 erkennbar ist, ist es für die Funktion der erfindungsgemäßen Vorrichtung nicht relevant, ob die Zentralschiene 4 oder das Tragelement 2 translatorisch bewegt wird, wobei das jeweils andere Bauteil feststeht. D.h. es spielt für die Funktion der erfindungsgemäßen Vorrichtung, d.h. für die Verwirklichung des Erfindungsgedanken keine Rolle, ob das Tragelement 2 entlang der Zentralschiene 4 bzw. der Führungsstange 4 bewegt wird, oder, ob die Zentralschiene 4 durch das Tragelement 2 hindurch in Richtung ihrer Längsachse 5 verschoben wird. In beiden Fällen kommt es zu einer Abrollbewegung der Abrollelemente 6 auf der Zentralschiene 4, die durch die Abrollelemente 6 translatorisch frei gelagert ist, während die rotierenden Laufflächen 7 der Abrollelemente 6 Rotationsenergie in elektrische Energie oder umgekehrt umwandeln. Im Falle des Betriebs der erfindungsgemäßen Vorrichtung als Linearantrieb stellen die Abrollelemente 6 mit Laufrad 7 und Nabenbereich 8 Elektromotoren dar, die mit Strom beaufschlagt, die Laufräder 7 in eine Drehbewegung versetzen und die durch Abrollen auf der Zentralschiene 4 dieselbige translatorisch bewegen, falls das Tragelement 2 festgehalten wird.

Im Betrieb der erfindungsgemäßen Vorrichtung, d.h. bei translatorischen Bewegungen der Zentralschiene 4 bzw. des Tragelements 2, kann der elektrische Strom, der durch das Abrollen der Laufräder 7 auf der Zentralschienen 4 gegenüber den drehfesten Nabenbereichen 8 erzeugbar ist, beispielsweise über die axialen Enden 9 der Abrollelementen 6 abgenommen und weitergeleitet werden. Bevorzugt wird man auf jeder Seite der Abrollelemente 6 eine elektrische Polung - Plus oder Minus - abnehmen. Bei Einleitung einer translatorischen Kraft auf die Zentralschiene 4 oder das Tragelement 2 agieren die Abrollelemente 6 ähnlich wie Nabendynamos, welche bspw. bei Fahrrädern Anwendung finden. Im Betrieb der erfindungsgemäßen Vorrichtung, bspw. in einem Welienkraftwerk, wechselt jedoch die translatorische Bewegungsrichtung oszillierend, was bei der erfindungsgemäßen Vorrichtung jeweils zu einer Drehrichtungsumkehr der Abrollelemente 6 führt, womit die Polung des erzeugten Stroms wechselt.

Bei der beschriebenen Verwendung der Vorrichtung in einem Wellenkraftwerk, wie oben geschildert, drehen sich die Laufräder 7 der Abrollelemente 6 beim Anheben des Schwimmkörpers und beim Absenken des Schwimmkörpers in entgegensetzten Richtungen. Diese Drehrichtungsumkehr kann einerseits für die Erzeugung von Wechselstrom ausgenutzt werden, oder kann andererseits durch Polumschaltung innerhalb des Generators ausgeglichen werden, sodass ein Gleichstrom an den axialen Enden 9 abgenommen werden kann. Der im letzteren Fall erzeugte Gleichstrom kann hierbei direkt zur Beladung eines Kondensators oder einer sonstigen Stromspeichervorrichtung, wie bspw. eines Akkumulators, verwendet werden. In beiden Fällen, also sowohl bei Erzeugung von Gleichstrom oder bei der Erzeugung von Wechselstrom, kann der erzeugte Strom auch direkt einem Verbraucher zugeführt werden. Die Zuführung von erzeugtem Wechselstrom an eine Stromspeichervorrichtung, welche bspw. die elektrische Energie in potentielle Energie umwandelt, ist dabei genauso vom Erfindungsgedanken umfasst, wie die Weiterleitung von Gleichstrom.

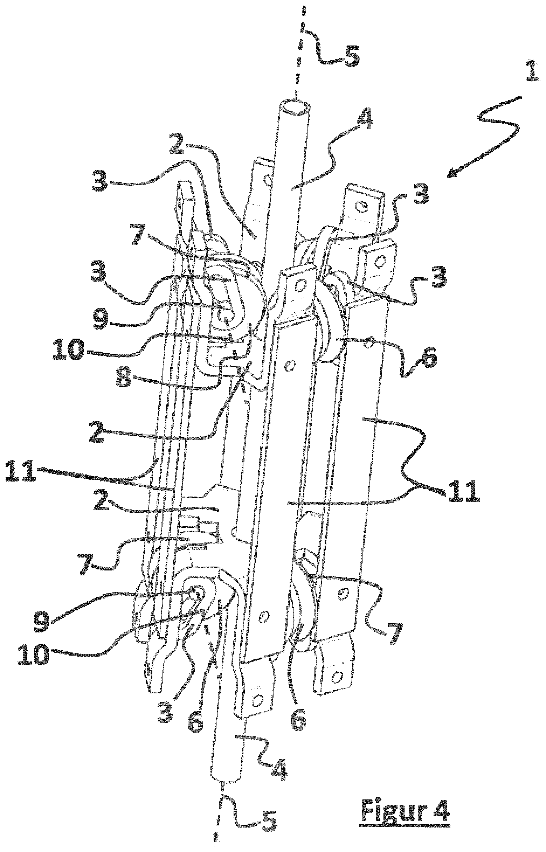

In Figur 4 ist exemplarisch ein zweites Ausführungsbeispiel der erfindungsgemäßen Vorrichtung gezeigt, bei dem zwei Tragelemente 2 mit darin aufgenommenen Abrollelementen 6 beabstandet in Längsrichtung der Zentralschiene 4 angeordnet sind, und so zwei Lagerstellen für die Zentralschiene 4 bilden. In dem in Figur 4 dargestellten Ausführungsbeispiel wird über die grundsätzliche Ausführung, die in den Figuren 1 bis 3 gezeigt ist, hinaus erreicht, dass die Zentralschiene 4 in der erfindungsgemäßen Vorrichtung in ihrer Längsrichtung von der erfindungsgemäßen Vorrichtung geführt ist. Zwei Gruppen von elastisch vorgespannten Abrollelementen 6 drücken gegen die Zentralschiene 4, womit in Längsrichtung 5 der Zentralschiene 4 zwei Lagerpunkte ausgebildet werden. Jeder der Lagerpunkte kann, wie oben für den einzelnen Lagerpunkt beschrieben, ausgebildet sein, wobei die beiden Tragelemente 2 weiter über Verbindungselemente 11 verbunden sein können. Auch in diesem Ausführungsbeispiel spielt es für die Funktion der erfindungsgemäßen Vorrichtung keine Rolle, ob die Zentralschiene 4 bzw. die Führungsschiene 4 oder die Tragelemente 2 translatorisch bewegt werden, während das jeweils andere Bauteil bezüglich der translatorischen Bewegung stillsteht.

So kann der Schwimmkörper in dem beispielhaften Anwendungsfall in einem Wellenkraftwerk - beispielsweise in dem aus DE 10 2008 048 730 B1 bekannten -, fest mit der Zentralschiene 4 der erfindungsgemäßen Vorrichtung verbunden sein, wobei bei einem Aufschwimmen des Schwimmkörpers, angeregt durch eine Welle, die Führungsstange d.h. die Zentralschiene 4 translatorisch in der erfindungsgemäßen Vorrichtung bewegt wird. Die Tragelemente 2 sind mit den darin angeordneten Abrollelementen 6 ortsfest am Wellenkraftwerk angebracht. Ist hingegen der Schwimmkörper mit den Tragelementen 2 bzw. mit den Verbindungselementen 11 fest verbunden und die Zentralschiene bzw. die Führungsstange 4 am Wellenkraftwerk ortsfest angebracht, so können sich die Tragelemente 2 translatorisch gegenüber der Zentralschiene 4 bewegen, wenn der Schwimmkörper durch eine Welle angehoben wird. In beiden Fällen rollen die Abrollelemente 6 auf der Zentraischiene 4 ab, wobei die hierbei erzeugten Rotationsbewegungen den Antrieb oder den Abtrieb einer Elektromaschine bilden.

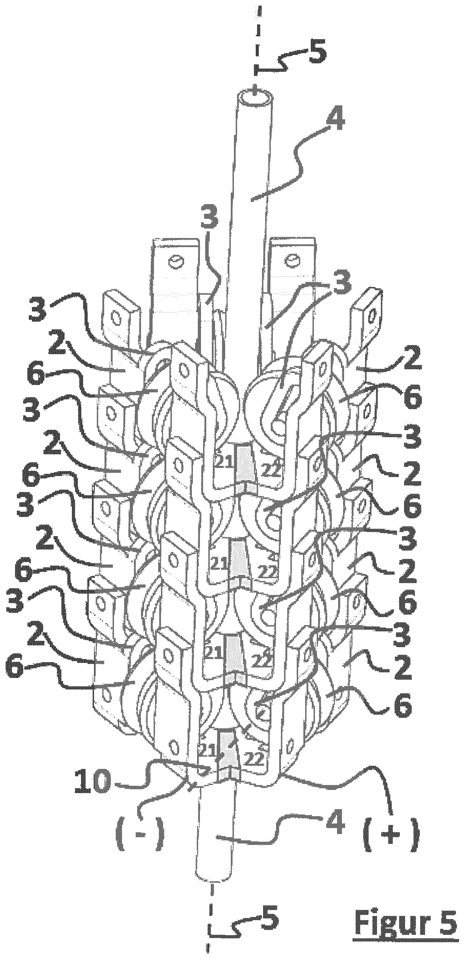

In Figur 5 ist eine konsequente Weiterbildung der erfindungsgemäßen Vorrichtung gezeigt, wobei längs der Zentralschiene 4 eine Vielzahl von Tragelementen 2 mit darin aufgenommenen Abrollelementen 6 angeordnet ist. Geeigneterweise sind jeweils zwei benachbarte Tragelemente so angeordnet, dass sie direkt miteinander verbindbar sind. Durch die Anordnung einer Vielzahl von Tragelementen 2 mit darin aufgenommenen Abrollelementen 6 steigt zwar das Gewicht der erfindungsgemäßen Vorrichtung, jedoch kann ggf. eine größere Kraft von der Welle abgenommen werden.

Eine bevorzugte Ausbildung des Tragelementes 2 ist in Figur 8 gezeigt, wobei das Tragelement 2 zweistückig derart ausgebildet ist, dass ein erster Teilträger 21 jeweils die ersten axialen Enden 9 der Nabenbereiche 8, bspw. die auf der linken Seite der Abrollelemente 6 aufnimmt, und ein zweiter Teilträger 22 jeweils die axialen Enden 9 der Nabenbereiche 8 auf der anderen Seite, bspw. auf der rechten Seiten der Abrollelemente 6, aufnimmt. Dabei sind die beiden Teilträger 21 und 22 elektrisch isoliert miteinander verbunden, sodass sie ein erfindungsgemäßes Tragelement 2 ausbilden. Ist, wie oben beispielhaft beschrieben, über die axialen Enden 9 der Nabenbereiche 8 der durch die erfindungsgemäße Vorrichtung erzeugte Strom abnehmbar, so ist jeder Teilträger nur mit einem elektrischen Pol der erfindungsgemäßen Vorrichtung verbunden. Für die Weiterleitung bzw. Ableitung oder Zuführung von Strom von bzw. zu der erfindungsgemäßen Vorrichtung ist somit nur eine elektrische Kontaktstelle je Teilträger 21 bzw. 22 erforderlich, um den Strom von bzw. zu allen Abrollelementen 6 zu leiten. Eine Verkabelung jedes einzelnen Abrollelements 6 kann somit vermieden werden und die elektrische Kontaktierung kann wesentlich vereinfacht und kompakter ausgestaltet werden.

In den Ausführungsbeispielen gemäß der Figuren 4 und 5, in denen mehr als ein Tragelement 2 in der erfindungsgemäßen Vorrichtung vorgesehen ist, können, bei zweistückiger Ausführung des Tragelements 2, jeweils die ersten Teilträger 21 und jeweils die zweiten Teilträger 22 der mehreren Tragelemente 2 jeweils elektrisch leitend miteinander verbunden werden, sodass eine Stromabnahme, bspw. mit einem Kabel, an der erfindungsgemäßen Vorrichtung mit einer einzigen Kontaktstelle für den Pluspol und einer einzigen Kontaktstelle für den Minuspol an einem der Vielzahl von Tragelementen 2 bzw. Teilträgern 21 oder 22 erreicht werden kann. Dies führt zu einer weiteren Reduzierung der erforderlichen Anzahl an Bauteilen. Dabei sind bevorzugt die jeweils ersten Teilträger 21 und die jeweils zweiten Teilträger 22 jeweils für sich gleiche Teile (Gleichteile). In ihrer Ausführung sind die ersten Teilträger 21 und die zweiten Teilträger 22 bevorzugt derart symmetrisch zueinander, dass sie bspw. Links- Rechts-Teile zueinander sind.

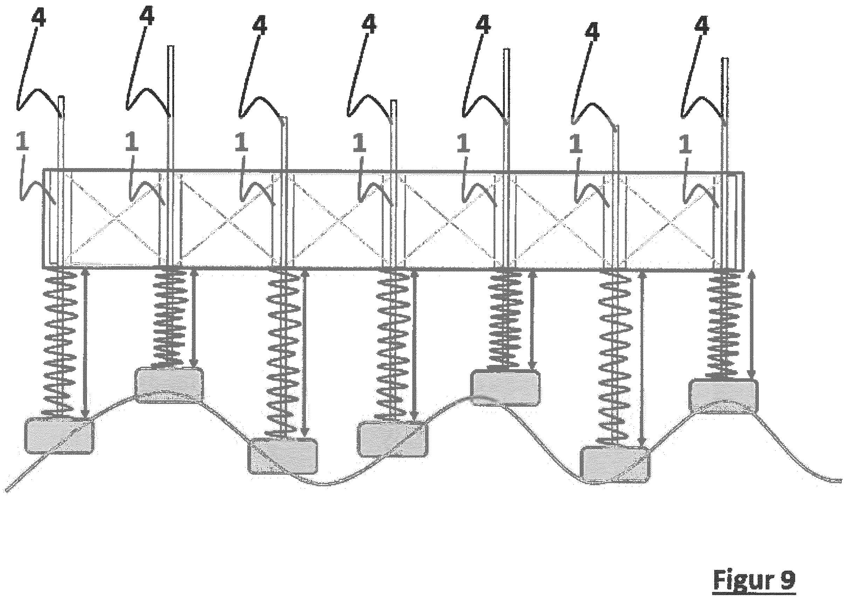

In Figur 9 ist schematisch das Wellenkraftwerk gemäß DE 10 2008 048 730 B1 gezeigt, wobei die Schwimmkörper 12, die von den Wasserwellen gehoben und gesenkt werden, fest mit den jeweiligen Führungsschienen 4 , welche die Zentralschienen 4 darstellen, verbunden sind, womit die Führungsschienen 4 vertikal oszillierend von den Wasserwellen bewegt werden. Jede der Führungsschienen 4 stellt dabei eine Zentralschiene 4 der erfindungsgemäßen Vorrichtung dar, wobei für jede Führungsschiene 4 eine erfindungsgemäße Vorrichtung vorgesehen ist. Die Tragelemente 2 mit den darin aufgenommenen Abrollelementen 6 sind mit der das Wellenkraftwerk überspannenden Trägerstruktur fest verbunden. Durch die oszillierende vertikale Bewegung der Zentralschienen 4 werden erfindungsgemäß die Abrollelemente 6 bzw. deren Laufräder 7 in Drehung versetzt, wodurch die als Generatoren bzw. Dynamo ausgebildeten Abrollelemente 6 Strom erzeugen, der an den einzelnen erfindungsgemäßen Vorrichtungen abgenommen und weitergeleitet werden kann. Das hier beschriebene Anwendungsbeispiel für die erfindungsgemäße Vorrichtung dient jedoch rein der Veranschaulichung für eine Vielzahl anderer Einsatzmöglichkeiten der erfindungsgemäßen Vorrichtung und begrenzt den Schutzbereich des Erfindungsgedankens nicht.

### Bezugszeichenliste

- 1: Vorrichtung
- 2: Tragelement
- 3: Haltelasche
- 4: Zentralschiene / Führungstange
- 5: Längsachse der Zentralschiene
- 6: Abrollelement / Wälzkörper / Abrollkörper
- 7: Laufrad / Lauffläche
- 8: Nabenbereich
- 9: axiales Ende
- 10: Drehachse Abrollelement
- 11: Verbindungselemente
- 12: Schwimmkörper

## Patentansprüche

1. Vorrichtung (1) zum reversiblen Übertragen von linearen Bewegungen in Rotationsbewegungen und zur Umwandlung der Rotationsbewegungen in elektrische Energie und umgekehrt,
- mit einer Zentralschiene (4),
- mit einem Tragelement (2), das die Zentralschiene (4) umgibt oder das von der Zentraischiene umgeben ist, wobei das Tragelement (2) in Längsrichtung der Zentralschiene (4) relativ zur Zentralschiene (4) in Linearbewegungen verschieblich angeordnet ist, und
- mit einer Mehrzahl von um Drehachsen (10) drehbare Abrollelemente (6), die, mit der Zentralschiene (4) in Berührung stehend, in dem Tragelement (2) drehbar gelagert sind, wobei die Abrollelemente (6) während der Linearbewegungen des Tragelementes (2) relativ zur Zentralschiene (4) im Zusammenwirken mit der Zentralschiene (4) Rotationsbewegungen ausführen,
wobei die Linearbewegungen mit dem Antrieb oder Abtrieb einer Elektromaschine gekoppelt sind, die mit elastischen Vorspannkräften beaufschlagten Abrollelemente (6) die Zentralschiene (4) druckkraftbeaufschlagt im Wesentlichen spielfrei lagern und so angeordnet sind, dass sich die Vorspannkräfte gegenseitig aufheben, und dass die Rotationsbewegungen mindestens eines der Abrollelemente (6) den Antrieb oder Abtrieb der Elektromaschine bilden, **dadurch gekennzeichnet,**
**dass** das Tragelement (2) Haltelaschen (3) für die Aufnahme der Drehachsen (10) der Abrollelemente (6) aufweist, die elastisch so verformt sind, dass die Abrollelemente (6) durch die Haltelaschen (3) elastisch vorgespannt gegen die Zentralschiene (4) gedrückt werden.

2. Vorrichtung (1) nach Anspruch 1, bei der das zumindest eine Abrollelement (6), das den Antrieb oder Abtrieb der Elektromaschine bildet, ein Laufrad (7), das mit der Zentralschiene (4) in Berührung steht, und einen bezüglich dem Laufrad (7) feststehenden koaxialen Nabenbereich (8) mit axialen Endbereichen (9) aufweist, die in Richtung der Drehachse (10) des Laufrades (7) weisen und mit denen das Abrollelement (6) im Tragelement (2) aufgenommen ist, wobei das Laufrad (7) einen Rotor und der Nabenbereich (8) einen Stator der Elektromaschine bilden und wobei über die axialen Endbereiche (9) ein elektrischer Strom an der Elektromaschine abnehmbar oder an die Elektromaschine zuführbar ist.

3. Vorrichtung (1) nach einem der Ansprüche 1 oder 2, bei der das Tragelement (2) einen Anschlag für die Begrenzung der Verformung der Haltelaschen aufweist.

4. Vorrichtung (1) nach einem der Ansprüche 1 bis 3, bei der die Zentralschiene (4) einen runden oder einen Vieleck-Querschnitt aufweist und zumindest in Teilbereichen einer Umfangsfläche quer zur Längsrichtung verzahnt bzw. geriffelt ist, wobei das an dieser Umfangsfläche abrollende Abrollelement (6) eine im Wesentlichen komplementär ausgebildete Umfangsfläche aufweist.

5. Vorrichtung (1) nach einem der Ansprüche 1 bis 4, bei der die Vorrichtung (1) mehr als ein Tragelement (2) mit darin angeordneten Abrollelementen (6) zum Ausbilden einer Linearführung für die Zentralschiene (4) aufweist.

6. Vorrichtung (1) nach einem der Ansprüche 1 bis 5, bei der das Tragelement (2) einstückig ausgebildet ist.

7. Vorrichtung (1) nach einem der Ansprüche 1 bis 5, bei der das Tragelement (2) zweistückig ausgebildet ist, derart dass ein erster Teilträger des Tragelementes (2) die axialen Endbereiche (9) der Abrollelemente (6) jeweils auf einer ersten Seite der Abrollelemente (6) aufnimmt und ein zweiter Teilträger des Tragelementes (2) die axialen Endbereiche (9) der Abrollelemente (10) jeweils auf einer zweiten gegenüberliegen Seite der Abrollelemente (6) aufnimmt, wobei der erste Teilträger (21) und der zweite Teilträger (22) elektrisch voneinander isoliert sind.

8. Vorrichtung (1) nach Anspruch 7, bei der die jeweils ersten Teilträger (21) und die jeweils zweiten Teilträger (22) der Tragelemente (2) elektrisch miteinander verbunden sind.

9. Vorrichtung (1) nach Anspruch 1 bis 8, bei der, im Fall, dass das Tragelement (2) die Zentralschiene (4) umgibt,. die lichte Weite zwischen den Abrollelementen vor dem Einsetzen der Zentralschiene (4) kleiner ist als der Durchmesser bzw. die Querschnittsabmessung der Zentralschiene (4) (s.10, z. 7-9) und, im Fall, dass die Zentralschiene (4) das Tragelement (2) umgibt, die Abrollelemente (6) elastisch vorgespannt gegen eine innere Fläche des Hohlprofils drücken (S.11, Z. 10).

10. Stromerzeugungsvorrichtung umfassend eine Vorrichtung nach einem der Ansprüche 1 bis 9, bei der durch eine im Wesentlichen in Längsrichtung der Zentralschiene (4) wirkende Kraft die Zentralschiene (4) oder das Tragelement (2) relativ zum jeweils anderen Bauteil linear verschiebbar ist, und die Elektromaschine ein Stromgenerator ist.

11. Stromerzeugungsvorrichtung nach Anspruch 10, bei der die Stromerzeugungsvorrichtung (1) ein Wellen- oder Impulskraftwerk ist, und die in Längsrichtung der Zentralschiene (4) relative Linearbewegung zwischen Zentralschiene (4) und Tragelement (2) mittels eines Schwimmkörpers bewirkt wird, der entweder mit der Zentralschiene (4) oder mit dem Tragelement (2) kraftschlüssig verbunden ist, wobei der Schwimmkörper ausgelöst durch eine Wellenbewegung eines Gewässers oder durch eine Luftdruckwelle linear oszillierend bewegbar ist.

12. Stromerzeugungsvorrichtung nach Anspruch 10, bei der der Schwimmkörper mit dem Tragelement (2) kraftschlüssig verbunden ist und das Tragelement (2) bzw. die Tragelemente (2) mit den darin angeordneten Abrollelementen (6) zumindest spritzwassergeschützt aufgenommen sind.

13. Linearantrieb umfassend eine Vorrichtung nach einem der Ansprüche 1 bis 9, bei dem mindestens ein Abrollelement (6) rotatorisch antreibbar ist und die Elektromaschine ein Elektromotor, insbesondere ein Schrittmotor ist.

14. Linearantrieb nach Anspruch 13, bei dem entweder die Zentralschiene (4) oder das Tragelement (2) ortsfest an einer Trägerstruktur angebunden ist.

## Claims

1. Device (1) for the reversible transfer of linear motion into rotational motion and for the conversion of rotational motion into electrical energy and vice versa.
- with a central rail (4),
- with a support element (2) which surrounds the central rail (4) or which is being surrounded by the central rail (4) and which is positioned so as to be capable of performing a linear motion relative to the central rail (4) in the longitudinal direction of the central rail (4), and
- with several rolling elements (6) capable of rotating around rotation axes (10), which, in contact with the central rail (4), are rotationally mounted in the support element (2), whereby the rolling elements (6) perform a rotational motion in conjunction with the central rail (4) during the linear motion of the support element (2) relative to the central rail (4),
whereby the linear motion is connected to the drive or output of an electric machine, the central rail (4) is essentially mounted free of clearance under pressure on elastically preloaded rolling elements (6) and the rolling elements (6) are arranged in such a way that the preload forces cancel each other out and that the rotational motion of at least one of the rolling elements (6) forms the drive or output of the electric machine, **characterized in that**
the support element (2) comprises retaining brackets (3) to hold the rotation axes (10) of the rolling elements (6), being elastically deformed in such a way that the rolling elements (6) are pressed by the retaining brackets (3) against the central rail (4) under an elastic preload force.

2. Device (1) according to Claim 1, in which at least one rolling element (6) forming the drive or output of the electric machine comprises a wheel (7) in contact with the central rail (4) which exhibits a co-axial hub section (8) that remains stationary in relation to the wheel (7) and has axial end sections (9), the latter pointing in the direction of the rotation axis (10) of the wheel (7) and acting as a mount for the rolling element (6) in the support element (2), whereby the wheel (7) forms a rotor and the hub section (8) forms a stator of the electric machine and whereby electric current can be drawn from the electric machine or supplied to it via the axial end sections (9).

3. Device (1) according to one of Claims 1 or 2, in which the support element (2) comprises an end stop for limiting the deformation of the retaining brackets.

4. Device (1) according to one of Claims 1 to 3, in which the central rail (4) comprises a round or polygonal cross section and is toothed or fluted transversely to the longitudinal direction at least in partial sections of a peripheral surface, whereby the rolling element (6) which rolls on this peripheral surface essentially forms a complementary peripheral surface.

5. Device (1) according to one of Claims 1 to 4, in which the device (1) comprises more than one support element (2) with rolling elements (6) arranged inside it to form a linear guidance for the central rail (4).

6. Device (1) according to one of Claims 1 to 5, in which the support element (2) forms a single component.

7. Device (1) according to one of Claims 1 to 5 in which the support element (2) is a dualsection component such that one partial support of the support element (2) holds the axial end sections (9) of the rolling elements (6) on a first side of the rolling elements (6) and a second partial support of the support element (2) holds the axial end sections (9) of the rolling elements (6) on the second, opposite side of the rolling elements (6), whereby the first partial support (21) and the second partial support (22) are electrically insulated from each other.

8. Device (1) according to Claim 7, in which the first partial supports (21) and the second partial supports (22) of the support elements (2) are electrically connected to one another.

9. Device (1) according to Claim 1 to 8 in which, in case the support element (2) surrounds the central rail (4) the clear gap between the rolling elements (6) before insertion of the central rail (4) is smaller than the diameter cross section of the central rail, and in case the central rail (4) surrounds the support element (2), the rolling elements (6) press against an inner surface of the hollow profile by means of elastic preloading.

10. Device for generating electrical current according to one of Claims 1 to 9, in which the central rail (4) or the support element (2) can be shifted in a linear motion relative to the respective other component by means of a force acting essentially in the longitudinal direction of the central rail (4), and the electric machine is an electrical generator.

11. Device for generating electrical current according to Claim 10, in which the device for generating electrical current (1) is a wave or pulse power plant and the linear relative motion between central rail (4) and support element (2) in the longitudinal direction of the central rail (4) is effected by means of a floating body which forms a force fit with the central rail (4) or the support element (2), whereby the floating body can be set in a linear oscillating motion by a wave motion or air pressure wave.

12. Device for generating electrical current according to Claim 10, in which the floating body forms a force fit with the support element (2), and the support element (2) or the support elements (2) with the rolling elements (6) mounted inside them are mounted at least in a splashproof manner.

13. Linear drive according to one of Claims 1 to 9, in which at least one rolling element (6) can be rotationally driven and the electric machine is an electric motor, in particular a stepper motor.

14. Linear drive according to Claim 13, in which either the central rail (4) or the support element (2) is statically fixed to a support structure.

## Revendications

1. Dispositif (1) pour le transfert réversible d'un mouvement linéaire en un mouvement de rotation et pour la conversion d'un mouvement de rotation en énergie électrique et vice versa,
- comprenant un rail central (4),
- comprenant un élément de support (2) qui entoure le rail central (4) ou qui est entouré par le rail central (4) et qui est positionné de manière à pouvoir effectuer un mouvement linéaire par rapport au rail central (4) dans la direction longitudinale du rail central (4), et
- comprenant plusieurs éléments de roulement (6) capables de tourner autour d'axes de rotation (10), qui, lorsqu'ils sont en contact avec le rail central (4), sont montés à rotation dans l'élément de support (2), les éléments de roulement (6) effectuant ainsi un mouvement de rotation conjointement avec le rail central (4) au cours du mouvement linéaire de l'élément de support (2) par rapport au rail central (4),
le mouvement linéaire étant relié à l'entraînement ou à la sortie d'une machine électrique, le rail central (4) étant essentiellement monté sans jeu sous pression sur des éléments de roulement précontraints élastiquement (6) et les éléments de roulement (6) étant disposés de telle sorte que les forces de précontrainte s'annulent et que le mouvement de rotation d'au moins l'un des éléments de roulement (6) constitue l'entraînement ou la sortie de la machine électrique, **caractérisé en ce que** l'élément de support (2) comprend des consoles de retenue (3) pour retenir les axes de rotation (10) des éléments de roulement (6), qui sont déformées élastiquement de telle sorte que les éléments de roulement (6) soient pressés par les consoles de retenue (3) contre le rail central (4) sous l'effet d'une force de précontrainte élastique.

2. Dispositif (1) selon la revendication 1, dans lequel au moins un élément de roulement (6) formant l'entraînement ou la sortie de la machine électrique comprend une roue (7) en contact avec le rail central (4), qui présente une section de moyeu coaxiale (8) qui reste stationnaire par rapport à la roue (7) et qui présente des sections d'extrémité axiales (9), ces dernières étant orientées dans la direction de l'axe de rotation (10) de la roue (7) et agissant en tant que fixation pour l'élément de roulement (6) dans l'élément de support (2), la roue (7) formant ainsi un rotor et la section de moyeu (8) formant ainsi un stator de la machine électrique et du courant électrique pouvant ainsi être prélevé de la machine électrique ou fourni à celle-ci par le biais des sections d'extrémité axiales (9).

3. Dispositif (1) selon l'une des revendications 1 ou 2, dans lequel l'élément de support (2) comprend une butée de fin de course pour limiter la déformation des consoles de retenue.

4. Dispositif (1) selon l'une des revendications 1 à 3, dans lequel le rail central (4) comprend une section transversale circulaire ou polygonale et est denté ou cannelé transversalement à la direction longitudinale au moins dans des sections partielles d'une surface périphérique, l'élément de roulement (6) qui roule sur cette surface périphérique formant ainsi essentiellement une surface périphérique complémentaire.

5. Dispositif (1) selon l'une des revendications 1 à 4, dans lequel le dispositif (1) comprend plus d'un élément de support (2) avec des éléments de roulement (6) disposés à l'intérieur de celui-ci de manière à former un guide linéaire pour le rail central (4).

6. Dispositif (1) selon l'une des revendications 1 à 5, dans lequel l'élément de support (2) forme un composant unique.

7. Dispositif (1) selon l'une des revendications 1 à 5, dans lequel l'élément de support (2) est un composant à deux sections de telle sorte qu'un support partiel de l'élément de support (2) retienne les sections d'extrémité axiales (9) des éléments de roulement (6) sur un premier côté des éléments de roulement (6) et qu'un deuxième support partiel de l'élément de support (2) retienne les sections d'extrémité axiales (9) des éléments de roulement (6) sur le deuxième côté opposé des éléments de roulement (6), le premier support partiel (21) et le deuxième support partiel (22) étant ainsi isolés électriquement l'un de l'autre.

8. Dispositif (1) selon la revendication 7, dans lequel les premiers supports partiels (21) et les deuxièmes supports partiels (22) des éléments de support (2) sont connectés électriquement les uns aux autres.

9. Dispositif (1) selon les revendications 1 à 8, dans lequel, au cas où l'élément de support (2) entoure le rail central (4), l'espace libre entre les éléments de roulement (6) avant l'insertion du rail central (4) est inférieur à la section transversale diamétrale du rail central, et au cas où le rail central (4) entoure l'élément de support (2), les éléments de roulement (6) pressent contre une surface interne du profilé creux au moyen d'une précontrainte élastique.

10. Dispositif pour générer un courant électrique selon l'une des revendications 1 à 9, dans lequel le rail central (4) ou l'élément de support (2) peut être déplacé suivant un mouvement linéaire par rapport à l'autre composant respectif au moyen d'une force agissant essentiellement dans la direction longitudinale du rail central (4), et la machine électrique est un générateur électrique.

11. Dispositif pour générer un courant électrique selon la revendication 10, dans lequel le dispositif pour générer un courant électrique (1) est une centrale à impulsions ou à vagues et le mouvement relatif linéaire entre le rail central (4) et l'élément de support (2) dans la direction longitudinale du rail central (4) est effectué au moyen d'un corps flottant qui forme un ajustement par force avec le rail central (4) ou l'élément de support (2), le corps flottant pouvant ainsi être animé d'un mouvement d'oscillation linéaire par un mouvement d'ondulation ou une onde de pression d'air.

12. Dispositif pour générer un courant électrique selon la revendication 10, dans lequel le corps flottant forme un ajustement par force avec l'élément de support (2), et l'élément de support (2) ou les éléments de support (2) avec les éléments de roulement (6) montés à l'intérieur de ceux-ci sont montés au moins d'une manière les protégeant contre les éclaboussures.

13. Entraînement linéaire selon l'une des revendications 1 à 9, dans lequel au moins un élément de roulement (6) peut être entraîné en rotation et la machine électrique est un moteur électrique, en particulier un moteur pas à pas.

14. Entraînement linéaire selon la revendication 13, dans lequel soit le rail central (4) soit l'élément de support (2) est fixé statiquement à une structure de support.
